Europäisches Patentamt

European Patent Office

Office européen des brevets

(11) Veröffentlichungsnummer: **0 417 706 A2**

# EUROPÄISCHE PATENTANMELDUNG

(21) Anmeldenummer: **90117413.6**

(22) Anmeldetag: **10.09.90**

(51) Int. Cl.5: **F16K 5/06**

(30) Priorität: **12.09.89 DE 3930456**

(43) Veröffentlichungstag der Anmeldung:
**20.03.91 Patentblatt 91/12**

(84) Benannte Vertragsstaaten:
**BE DE ES FR IT NL**

(71) Anmelder: **CHEMAT GmbH Armaturen für
Industrie- und Nuklearanlagen
Carl-Benz-Strasse 4
W-7592 Renchen(DE)**

(72) Erfinder: **Kraft, Gerd
Bahnhofstrasse 31
W-7523 Graben-Neudorf(DE)**

(74) Vertreter: **Betten & Resch
Reichenbachstrasse 19
W-8000 München 5(DE)**

(54) **Absperrhahn.**

(57) Bei einem Absperrhahn ist ein Kugelküken (12) vollständig mit einer Kunststoff-Ummantelung (20) umgeben, so daß das zu leitende Medium nicht in einen zwischen der Unterseite des Kugelkükens (12) und der Unterseite eines das Kugelküken samt Ummantelung aufnehmenden Aufnahmeraums gebildeten Totraum gelangen kann.

Fig.1

EP 0 417 706 A2

## ABSPERRHAHN

Die Erfindung betrifft einen Absperrhahn mit einem Gehäuse, einem im Gehäuse ausgebildeten Aufnahmeraum für ein Küken, einem im Aufnahmeraum drehbar gelagerten Küken, einer mit dem Küken verbundenen Spindel zum Betätigen des Hahns, und mit einer das Küken zumindest teilweise umgebenden Kunststoff-Zwischenschicht zwischen Küken und Wandung des Aufnahmeraums.

Es sind beispielsweise Absperrhähne bekannt, bei denen das Küken kegelig ausgebildet ist und zwischen Küken und kegeliger Wandung des Aufnahmeraums eine Zwischenschicht aus PTFE angeordnet ist, welche einerseits als Dichtung und weiterhin als Gleitlager dient. Die bekannte Zwischenschicht endet etwa in Höhe des unteren Endes des Kükens, so daß zwischen Gehäuse und Küken an der der Spindel abgewandten Seite des Kükens ein Totraum entsteht.

Nachdem eine hundertprozentige Dichtheit zwischen sich bewegenden Teilen in der Praxis niemals gewährleistet werden kann, ist damit zu rechnen, daß sich in diesem Totraum das zu leitende Medium ansammelt. Dies kann insbesondere im Lebensmittelbereich unter hygienischen Gesichtspunkten bedenklich sein.

Der Erfindung liegt daher im wesentlichen die Aufgabe zugrunde, einen Absperrhahn der eingangs genannten Gattung so weiterzubilden, daß er durch Vermeidung von Toträumen, in denen sich das zu leitende Medium ansammeln könnte, insbesondere auch im Lebensmittelbereich einsetzbar ist.

Zur Lösung dieser Aufgabe ist im wesentlichen vorgesehen, daß die Kunststoff-Zwischenschicht als sich vollständig auch um den der Spindel abgewandten Bereich des Kükens herum erstreckende Ummantelung ausgebildet ist. Nachdem die Ummantelung relativ zum Gehäuse drehfest angeordnet ist, ist die Dichtung zwischen Ummantelung und Gehäuse statisch und es ergeben sich hier sehr viel weniger Probleme mit möglichen Undichtigkeiten. Über den einer relativen Bewegung unterliegenden Dichtbereich zwischen Küken und Ummantelung kann im Falle des erfindungsgemäßen Absperrhahns das zu leitende Medium nicht mehr in einen zwischen Unterseite des Kükens und Gehäuse vorhandenen Hohlraum eindringen, nachdem das Küken an seiner Unterseite vollständig ummantelt ist.

Vorzugsweise ist das Küken in an sich bekannter Weise kugelig ausgebildet, wodurch die Reibung zwischen Küken und Sitz minimiert und somit die Lebensdauer maximiert wird.

In bevorzugter Weiterbildung der Erfindung ist die Ummantelung kegelig und koaxial zur Spindel ausgebildet, so daß sich hinsichtlich des Zusammenbaus des erfindungsgemäßen Absperrhahns die bekannten Vorteile einer Kegelküken-Konstruktion ergeben.

Gemäß weiteren vorteilhaften Merkmalen der Erfindung ist vorgesehen, daß die Ummantelung eine senkrecht zur Spindelachse verlaufende, sich zwischen Spindel und Wandung des Aufnahmeraums erstreckende Dichtfläche definiert, daß eine koaxial zur Spindelachse verstellbare Stellschraube vorgesehen ist, die eine der Dichtfläche gegenüberliegende Anpressfläche aufweist, und daß zwischen Dichtfläche und Anpressfläche ein ringförmiges Dichtelement angeordnet ist, welches vorzugsweise von einem Ring von (im wesentlichen rechteckigen Querschnitt gebildet ist, der an seiner der Dichtfläche zugewandten Unterseite eine umlaufende Ausnehmung aufweist, die einen O-Ring aufnimmt; der Ring liegt im eingebauten Zustand sowohl an der Spindel als auch am Sitz an und besteht vorzugsweise aus karbonverstärktem PTFE. Auf diese Weise wird auch am oberen Bereich des Kükens eine sehr zuverlässige und äußerst verschleißarme Dichtung geschaffen, welche zusätzlich mittels der Stellschraube in Abhängigkeit vom Verschleiß nachgestellt werden kann.

Besonders vorteilhaft ist es weiterhin, wenn erfindungsgemäß die Ummantelung auf das Küken aufgespritzt ist, so daß das Kugelküken, die hieran angeformte Spindel und die Ummantelung einstückig sind. Im Betrieb wird dann die Ummantelung am Gehäuse formschlüssig gegen Verdrehen gesichert und die Kugel samt Schaft kann sich relativ zur Ummantelung drehen, wobei aufgrund des bevorzugten Herstellungsverfahrens ein auch hinsichtlich der Dichtheit optimaler Sitz zwischen Kugel und Ummantelung gewährleistet ist.

Weitere vorteilhafte Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher beschrieben wird. In der Zeichnung zeigen:

Figur 1 einen Schnitt durch einen erfindungsgemäßen Absperrhahn,

Figur 2 einen Schnitt durch den Hahn gemäß Figur 1 in einer zur Darstellung gemäß Figur 1 senkrechten Ebene, und

Figur 3 einen Schnitt durch einen Absperrhahn nach dem Stand der Technik.

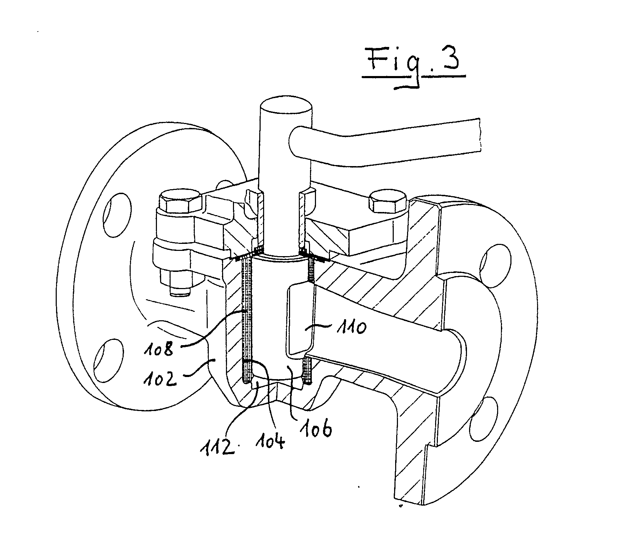

Zunächst wird auf Figur 3 Bezug genommen, welche den bekannten Stand der Technik zeigt. Wie aus Figur 3 ersichtlich, ist im Gehäuse 102 des Absperrhahns eine in etwa zylindrische, jedoch leicht kegelige Bohrung 104 ausgebildet, in welcher das im wesentlichen ebenfalls zylindrische, jedoch leicht kegelige Küken 106 drehbar gelagert ist. Zwischen Küken 106 und der Seitenwandung der Bohrung 104 ist eine Zwischenschicht 108 aus PTFE angeordnet, welche zur Abdichtung und Lagerung des Kükens 106 dient. Die Zwischenschicht 108 umgibt die im wesentlichen zylindrische Umfangsfläche des Kükens 106, selbstverständlich mit Ausnahme des Bereichs des Küken-Durchgangskanals 110. Wie aus Figur 3 deutlich erkennbar ist, wird zwischen der Unterseite des Kükens 106 und dem Boden der Bohrung 104 ein Totraum 112 gebildet, in den das Medium insbesondere über die Kontaktfläche zwischen Küken 106 und Zwischenschicht 108 gelangen kann.

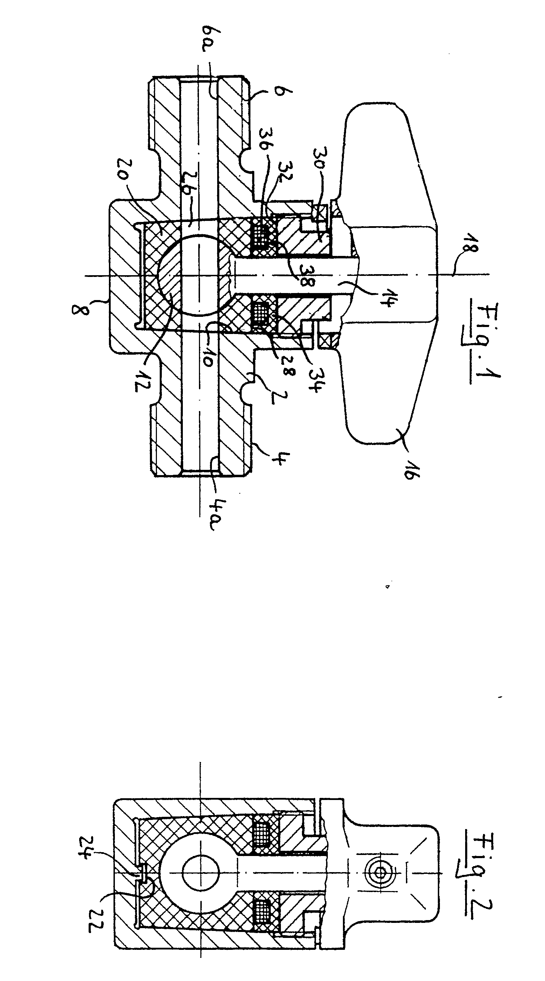

Im Falle des erfindungsgemäßen Absperrhahns, der beispielsweise anhand der Figuren 1 und 2 dargestellt ist, kann über diesen Weg das Medium nicht in den Totraum gelangen.

Beim Ausführungsbeispiel gemäß Figuren 1 und 2 ist mit der Bezugsziffer 2 das Gehäuse eines Absperrhahns bezeichnet, welches zwei Anschlußteile 4, 6 und einen dazwischen angeordneten mittleren Gehäuseteil 8 aufweist. Im mittleren Gehäuseteil 8 ist ein leicht kegeliger, nach unten geschlossener Aufnahmeraum 10 für ein Küken 12 ausgebildet. Am Küken 12, welches im wesentlichen kugelig ist, ist eine Spindel 14 einstückig angeformt, wobei an dem dem Küken 12 gegenüberliegenden Ende der Spindel 14 ein Handhebel 16 zum Betätigen des Absperrhahns befestigbar ist. Der Aufnahmeraum 10, das Küken 12 und die Spindel 14 sind koaxial auf der Achse 18 angeordnet.

Das Kugelküken 12 einschließlich eines diesem benachbarten Abschnittes der Spindel 14 sind mit einer Ummantelung beispielsweise aus PTFE oder aus FEP versehen. Die Ummantelung 20 umgibt das Kugelküken 12 - selbstverständlich mit Ausnahme des Bereichs des Küken-Durchgangskanals - vollständig und ist in fertigungstechnisch einfacher Weise auf das Kugelküken 12 aufgespritzt. Die Ummantelung 20 hat eine äußere Gestalt, welche der Gestalt des Aufnahmeraums 10 entspricht, so daß sie im eingebauten Zustand dichtend an der Seitenwandung des Aufnahmeraums 10 anliegt, wobei sie mittels der weiter unten noch im einzelnen zu beschreibenden Einrichtung zusätzlich nach unten gepreßt wird, so daß sich eine besonders gute Dichtung zwischen Seitenwandung des Aufnahmeraums 10 und Außenfläche der Ummantelung 20 ergibt.

Wie aus Figur 2 ersichtlich, ist an der Unterseite der Ummantelung 20 eine Nut 22 ausgebildet, in die bei eingesetztem Küken ein entsprechend geformter Vorsprung 24 am Boden des Aufnahmeraums 10 eingreift, um so eine Rotation der Ummantelung 20 relativ zum Gehäuse 2 zuverlässig zu verhindern. Wie insbesondere aus Figur 1 ersichtlich, fluchten im eingesetzten Zustand des Kükens die Durchgangsöffnungen 26 der Ummantelung 20 mit den entsprechenden Zuleitungen 4a, 6a der Anschlußteile 4, 6 des Gehäuses 2.

Die in der Darstellung gemäß Figuren 1 und 2 obenliegende Seite der Ummantelung 20 ist als Dichtfläche 28 ausgebildet. Eine Stopfbuchsschraube 30, welche über ein Außengewinde mit einem am oberen Ende des Aufnahmeraums 10 des mittleren Gehäuseteils 8 ausgebildeten Innengewinde zusammenwirkt, ist in Richtung der Achse 18 verstellbar. Die Stopfbuchsschraube 30 weist eine der Dichtfläche 28 gegenüberliegende, zur Achse 18 senkrechte untere Anpressfläche 32 auf. Zwischen Anpressfläche 32 und Dichtfläche 28 ist ein Dichtelement angeordnet, welches aus einem Ring 34 aus PTFE mit im wesentlichen rechteckförmigem Querschnitt und einem hierin gehaltenen O-Ring 36 besteht, der in einer an der Unterseite des Rings 34 ausgebildeten, ringförmigen Ausnehmung 38 angeordnet ist.

Die Abmessungen des im Querschnitt im wesentlichen rechteckförmigen Rings 34 sind derart, daß er mit seiner Innenseite an der Spindel 14 und mit seiner Außenseite an der Seitenwandung des Aufnahmeraums 10 anliegt. Durch Anziehen der Stopfbuchsschraube 30 wird einerseits der O-Ring 36 dichtend gegen die Dichtfläche 28 der Ummantelung 20 gedrückt, andererseits werden die innerhalb und außerhalb der Ausnehmung 38 liegenden Bereiche des Rings 34 nach innen bzw. außen gespreizt, wodurch eine hervorragende Abdichtung auch gegenüber der Spindel einerseits und dem Gehäuse andererseits gewährleistet ist. Bei auftretendem Verschleiß muß lediglich die Stopfbuchsschraube nachgestellt werden, wodurch gleichzeitig auch eine etwaige Undichtigkeit, welche aufgrund eines zwischen Kugelküken und Ummantelung auftretenden Verschleisses entsteht, behoben werden kann.

Der Ring 34 besteht vorzugsweise aus hochverschleißfestem PTFE-Compound, so daß ein Verschleiß zwischen Dichtring 34 und Spindel 14 auf ein Minimum reduziert wird und die Dichtungsanordnung somit äußerst verschleißarm ist, zumal der O-Ring 36 lediglich statisch, nicht jedoch dynamisch belastet wird.

Bezugszeichenliste

2 Gehäuse
4 Anschlußteil
4a Zuleitung
6 Anschlußteil
6a Zuleitung
8 mittlerer Gehäuseteil

10 Aufnahmeraum

12 Küken

14 Spindel

16 Handhebel

18 Achse

20 Ummantelung

22 Nut

24 Vorsprung

26 Durchgangsöffnungen

28 Dichtfläche

30 Stopfbuchsschraube

32 Anpressfläche

34 Ring

36 O-Ring

38 Ausnehmung

102 Gehäuse

104 Bohrung

106 Küken

108 Zwischenschicht

110 Küken-Durchgangskanal

112 Totraum

**Ansprüche**

1. Absperrhahn mit einem Gehäuse, einem im Gehäuse ausgebildeten Aufnahmeraum für ein Küken, einem im Aufnahmeraum drehbar gelagerten Küken, einer mit dem Küken verbundenen Spindel zum Betätigen des Hahns, und mit einer das Küken zumindest teilweise umgebenden Kunststoff-Zwischenschicht zwischen Küken und Wandung des Aufnahmeraums,
dadurch gekennzeichnet,
daß die Kunststoff-Zwischenschicht als sich vollständig auch um den der Spindel (14) abgewandten Bereich des Kükens (12) herum erstreckende Ummantelung (20) ausgebildet ist.

2. Absperrhahn nach Anspruch 1,
dadurch gekennzeichnet,
daß das Küken (12) in an sich bekannter Weise als Kugel-oder Kegelküken ausgebildet ist.

3. Absperrhahn nach Anspruch 2,
dadurch gekennzeichnet,
daß die Ummantelung (20) am Gehäuse (2) formschlüssig gegen Verdrehen gehalten ist.

4. Absperrhahn nach Anspruch 2 oder 3,
dadurch gekennzeichnet,
daß die Ummantelung (,20) im wesentlichen kegelig und koaxial zur Spindel (14) ausgebildet ist.

5. Absperrhahn nach Anspruch 4,
dadurch gekennzeichnet,
daß die Ummantelung (20) eine senkrecht zur Spindelachse (18) verlaufende, sich zwischen Spindel (14) und Wandung des Aufnahmeraums (20) erstreckende Dichtfläche (28) aufweist, daß eine koaxial zur Spindelachse (18) verstellbare Stellschraube (30) vorgesehen ist, die eine der Dichtfläche (28) gegenüberliegende Anpressfläche (32) aufweist, und daß zwischen Dichtfläche (28) und Anpressfläche (32) ein ringförmiges Dichtelement (34, 36) angeordnet ist.

6. Absperrhahn nach Anspruch 5,
dadurch gekennzeichnet,
daß das Dichtelement (34, 36) von einem Ring (34) von im wesentlichen rechteckförmigem Querschnitt gebildet ist, der an seiner der Dichtfläche (28) zugewandten Unterseite eine umlaufende Ausnehmung (38) aufweist, die einen O-Ring (36) aufnimmt.

7. Absperrhahn nach Anspruch 6,
dadurch gekennzeichnet,
daß der Ring (34) im eingebauten Zustand sowohl an der Spindel (14) als auch an der Wandung des Aufnahmeraums (10) anliegt.

8. Absperrhahn nach Anspruch 5 oder 6,
dadurch gekennzeichnet,
daß der Ring (34) aus hochverschleißfestem PTFE-Compound besteht.

9. Absperrhahn nach einem der vorhergehenden Ansprüche,
dadurch gekennzeichnet,
daß die Ummantelung (20) auf das Küken (12) aufgespritzt ist.

Fig.1

Fig.2

Fig.3